# EUROPÄISCHE PATENTSCHRIFT

(11) **EP 2 133 604 B1**
(45) Veröffentlichungstag und Bekanntmachung des Hinweises auf die Patenterteilung: **13.03.2013**
(21) Anmeldenummer: 08010588.5
(22) Anmeldetag: 11.06.2008
(51) Int. Cl.: F16J 3/04

(54) **Balg mit einem sich axial erstreckenden Druckausgleichselement**
Bellows with an axially stretching pressure equalisation element
Soufflet avec un égalisateur de pression s'étendant axialement

(43) Veröffentlichungstag der Anmeldung: 16.12.2009
(73) Patentinhaber: Carl Freudenberg KG, 69469 Weinheim (DE)
(72) Erfinder: Kritzer, Peter, 67147 Forst (DE); Scheidemann, Robert, 10589 Berlin (DE); Klenk, Thomas, 69221 Dossenheim (DE); Schirmer, Stefan, 31275 Lehrte (DE)

(56) Entgegenhaltungen:
- DE-A1-102004 042 552
- FR-A- 2 792 273
- FR-A- 2 843 931

## Beschreibung

### Technisches Gebiet

Die Erfindung betrifft einen Balg mit einem reversibel deformierbaren Grundkörper, welcher ein Volumen einschließt und einen Durchgang mit einem ersten Ende und einem zweiten Ende aufweist, wobei dem Grundkörper zumindest am ersten Ende ein sich axial erstreckendes ringförmiges Anbindungselement zugeordnet ist.

### Stand der Technik

Aus der FR-A-2 843 931 und der DE 10 2004 042 552 A1 ist bekannt, Druckausgleichselemente zu verwenden, welche aus Polymerharz gefertigt sind. Die FR-A-2 792 273 offenbart einen Balg, bei dem in einem gefalteten Bereich ein Druckausgleichselement vorgesehen ist.

Bälge der eingangs genannten Art sind aus dem Stand der Technik bereits bekannt und umschließen im Allgemeinen ein Volumen hermetisch. Die Bälge finden vorwiegend bei Gelenkwellen oder in Lenksystemen Anwendung, sind aber auch in vielen anderen Bereichen der Industrie anzutreffen. Beim Auseinanderziehen des Grundkörpers entsteht im Volumen ein Unterdruck. Beim Zusammenschieben des Grundkörpers entsteht ein Überdruck. Insbesondere beim Überdruck kann ein ungewolltes Einknicken des Grundkörpers auftreten. Dies gilt insbesondere für Bälge, die als Achsmanschette eingesetzt werden.

Um dem zu begegnen, ist es bekannt die Geometrie eines Balgs zu modifizieren. Dies lehrt die DE 103 23 071 A1. Ein Schutz gegen ungewolltes Einknicken des Balgs ist auch aus der DE 10 2006 027 048 B3 bekannt.

Aus dem Stand der Technik ist auch bekannt, zwischen der Atmosphäre und dem vom Grundkörper eingeschlossenen Volumen einen Druckausgleich herzustellen. Dies lehrt beispielsweise die DE 199 17 998 C2 oder die DE 600 31 760 T2.

Aus der DE 199 17 392 B4 ist bekannt, den Grundkörper teilweise gasdurchlässig auszubilden. Dies schwächt jedoch den Grundkörper in seinem Aufbau. Die DE 40 33 275 C2 lehrt eine radial angeordnete Druckausgleichsöffnung.

Es ist des Weiteren bekannt, zwischen den Volumina zweier Bälge einen Druckausgleich herzustellen. Üblicherweise werden Bälge bei Lenksystemen in Kraftfahrzeugen Temperaturen zwischen -40°C und +120°C unterworfen. Hierdurch können Druckdifferenzen zwischen Atmosphäre und dem Volumen im Inneren des Balges in Höhe von bis zu 0,7 bar auftreten.

Die aus dem Stand der Technik bekannten Druckausgleichselemente können zwar einen schnellen Fluidaustausch zwischen Atmosphäre und Volumen ermöglichen, jedoch nicht sicherstellen, dass das Volumen im Inneren des Grundkörpers über einen längeren Betriebszyklus nicht kontaminiert wird.

### Darstellung der Erfindung

Der Erfindung liegt daher die Aufgabe zu Grunde, einen Balg der eingangs genannten Art derart auszugestalten und weiterzubilden, dass sowohl ein schneller Druckausgleich zwischen dem Volumen und einem weiteren Raum als auch ein zuverlässiger Schutz des Volumens vor Kontaminationen gewährleistet ist, wobei der Schutz über die Lebensdauer des Balgs aufrechterhalten bleibt.

Erfindungsgemäß wird die voranstehende Aufgabe mit den Merkmalen des Patentanspruchs 1 gelöst.

Erfindungsgemäß ist erkannt worden, dass ein relativ dünnes Druckausgleichselement, welches sich in axialer Richtung erstreckt, eine ausreichend lange Weglänge bereitstellen kann, um ein durch das Druckausgleichselement hindurchtretendes Fluid zu filtern. Des Weiteren ist erkannt worden, dass die axiale Erstreckung eine ausreichend große Querschnittsfläche zur Verfügung stellen kann, durch die ein Fluid hindurchtreten kann, um einen raschen Druckausgleich zu bewirken.

Ein Vliesstoff zeigt aufgrund seiner Materialeigenschaften eine hohe Filterleistung auch bei hoher Beladung mit Partikeln. Dies unterscheidet ihn von Membranen, die keine echten Tiefenfilterelemente darstellen können und dadurch bei Beladung mit Partikeln schnell verstopfen. Vliesstoffe zeigen des Weiteren eine labyrinthartige, stochastische Faseranordnung. Hierdurch wird eine inhomogene Porenstruktur geschaffen, welche plötzliche Druckstöße überraschend gut abfedern kann. Insoweit erlaubt der erfindungsgemäße Balg, einen raschen Druckausgleich zwischen dem Volumen und einem weiteren Raum herzustellen und gleichzeitig das Volumen vor Kontaminationen zu schützen.

Ein Fluidaustausch erfolgt erfindungsgemäß in axialer Richtung, also in einer sich in Längsrichtung erstreckenden Ebene des Vliesstoffs. Die Filtrierung erfolgt entgegen einer aus dem Stand der Technik bekannten typischen Filtrierung, die üblicherweise orthogonal zu dieser Ebene erfolgt. Durch die Filtrierung in der Ebene wird sichergestellt, dass größere, verfahrensbedingte Inhomogenitäten des Vliesstoffs ausgeglichen werden.

Zudem ist erkannt worden, dass ein Vliesstoff bei Druckbeaufschlagung senkrecht zur Ebene bei Fixierung des Balgs auf einer Stange nicht komplett zusammengedrückt wird, also seine Porosität nicht verliert. Auch dies ist durch den für einen Vliesstoff typischen, stochastisch mehrlagigen Aufbau sichergestellt.

Gegenüber Membranen weist ein Vliesstoff des weiteren eine um Größenordnungen höhere Luftdurchlässigkeit auf. Dadurch kann ein wesentlich schnellerer Fluidaustausch zwischen dem Inneren des Balgs und der Umgebung stattfinden, wodurch die Druckdifferenz und dadurch das Risiko des Einknickens verringert werden kann.

Vor diesem Hintergrund weist das Druckausgleichselement in axialer Richtung eine größere Ausdehnung auf als in radialer Richtung. Vorzugweise könnte die Erstreckung des Druckausgleichselements in axialer Richtung mindestens den fünffachen Wert der Erstreckung in radialer Richtung aufweisen.

Folglich ist die eingangs genannte Aufgabe gelöst.

Das Anbindungselement könnte das Druckausgleichselement zumindest teilweise umgeben. Durch diese konkrete Ausgestaltung ist sichergestellt, dass im Grundkörper des Balges ausgebildete Falten nicht durch Anordnung eines Druckausgleichselements geschwächt werden. Die Struktur des Balges und dessen mechanische Stabilität werden daher nicht beeinträchtigt.

Das Druckausgleichselement könnte austauschbar ausgestaltet sein und vom Grundkörper zerstörungsfrei abtrennbar sein. Durch diese konkrete Ausgestaltung kann ein Balg aus Elastomer erneut verwendet werden. Eine teure Entsorgung des Elastomermaterials entfällt. Lediglich das kontaminierte Druckausgleichselement kann entsorgt werden.

Das Anbindungselement und das Druckausgleichselement könnten konzentrisch angeordnet sein. Bei dieser konkreten Ausgestaltung ist es möglich, eine Stange, welche durch den Durchgang des Grundkörpers hindurchläuft, sowohl mit dem Druckausgleichselement als auch mit dem Anbindungselement zu umgeben. Hierdurch ergeben sich Montagevorteile. Vorzugsweise überdeckt das ringförmige Anbindungselement die Druckausgleichselemente und presst diese gegen die Stange.

Vor diesem Hintergrund ist denkbar, dass das Druckausgleichselement ringförmig ausgestaltet ist. Durch diese konkrete Ausgestaltung kann das Druckausgleichselement auf eine Stange aufgeschoben werden.

Das Druckausgleichselement könnte sich spiralförmig im Anbindungselement erstrecken. Zur Erreichung einer besonders großen axialen Weglänge zur Filterung des Fluids könnte der Vliesstoff spiralförmig im Anbindungselement des Balgs angeordnet sein. Dabei könnten die Spiralgänge des Viiessoffs beispielsweise durch eine im Anbindungselement ebenfalls spiralförmig umlaufende, geschlossene Dichtwulst, vorzugsweise aus Elastomer, voneinander getrennt sein. Diese Dichtwulst schützt dann das Druckausgleichselement vor einer zu starken Verpressung durch Schlauchklemmen am Anbindungselement des Balgs. Durch diese Ausgestaltung ist sichergestellt, dass ein Fluid einen sehr langen Weg durch den Vliesstoff hindurchlaufen muss und dadurch in ausreichender Weise gefiltert werden kann. Parfikelförmige Kontaminationen geraten daher kaum ins Volumen im Inneren des Grundkörpers. Zudem führt die Beladung des Vliesstoffs durch Partikelkontaminationen aufgrund dessen labyrinthartiger Porenstruktur verbunden mit einer Tiefen-Filtenwirkung nicht frühzeitig zu einer Verschließung des Druckausgleichselements. Des Weiteren ist das Eindringen von Wasser in das Innere des Grundkörpers weitgehend vermieden. Hierdurch ist das Risiko einer Korrosion von Metallteilen im Inneren des Balges deutlich verringert.

Zwei Druckausgleichselemente könnten in axialer Richtung benachbart angeordnet sein. Durch diese konkrete Ausgestaltung ist es möglich, einem ersten Druckausgleichselement eine stärker abdichtende Funktion und einem zweiten Druckausgleichselement eine stärker filternde Funktion zuzuordnen. Insbesondere könnte in einem Druckausgleichselement ein Superabsorber eingearbeitet sein, der verhindert, dass Wasser in das Innere des Balgs eindringt. Hierdurch kann Korrosion verhindert werden. Denkbar ist auch, dass ein Druckausgleichselement eingebrachte Feuchtigkeit bindet. Des weiteren ist denkbar, in das Druckausgleichselement Aktivkohte mit einzubinden, welches schädliche Kontaminationen binden kann und damit das Volumen im Inneren des Balgs schützt.

Vor diesem Hintergrund ist auch denkbar, dass ein Druckausgleichselement so genannte Phase-Change-Materials enthält, welche eine Pufferung von Temperaturspitzen bewirken können. Bei schnell ansteigenden Temperaturen findet bei diesen Materialien ein Phasenübergang statt. Die absorbierte Schmelzwärme führt dabei nicht zu einer Erwärmung des umliegenden Systems. Dieser Prozess ist reversibel. Eine zu schnelle Abkühlung wird ebenfalls gepuffert. Diese Phase-Change-Materials können z.B. in einer Vliesstoffstruktur enthalten sein.

Vor diesem Hintergrund könnten zwei Druckausgleichselemente auch in radialer Richtung benachbart angeordnet sein. Mit dieser Anordnung kann sichergestellt werden, dass eine, vorzugsweise feinporige, Lage als Schmutz-Partikel-Speicher wirkt, die andere, vorzugsweise offenere, Lage als Transferelement für das Fluid wirken kann. Die Lagen können als Vliesstoffe ausgestaltet sein.

Mehrere Druckausgleichselemente könnten in eine Hülse eingebettet sein. Durch diese konkrete Ausgestaltung ist es möglich, die Hülse auf eine Stange aufzuschieben und sodann durch das Anbindungselement zu überdecken. Die Hülse könnte nach Einmontieren von einem innerhalb des Grundkörpers angeordneten Spiegelelement verliersicher befestigt werden. Die Druckausgleichselemente könnten durch ein Spritzgießverfahren in ein thermoplastisches Material oder in ein Metall eingebettet sein. Denkbar ist auch, die Druckausgleichselemente in Reaktionsharze oder Gummi einzubetten oder in die Hülse einzukleben oder einzupressen.

Die Druckausgleichselemente könnten vor diesem Hintergrund segmentweise in der Hülse eingebettet sein. Hierdurch bildet die Hülse eine Querschnittsfläche aus, welche durchlässige und nichtdurchlässige Bereiche aufweist.

Ein Druckausgleichselement könnte des Weiteren in einer Nut in einer Stange eingelegt und von dem Anbindungselement umgeben sein. Hierdurch ist das Druckausgleichselement besonders verschiebefest angeordnet.

Zwischen dem Anbindungselement und dem Druckausgleichselement oder zwischen zwei Druckausgleichselementen könnte ein Transponder angeordnet sein. DerTransponder könnte insbesondere als RFID-Tag ausgestaltet sein. Ein RFID-Tag besteht aus einem Chip und einer Antenne. Durch diese konkrete Ausgestaltung ist es möglich, die Position des Balgs in einem Kraftfahrzeug zu erfassen. Zudem ist es möglich, ein fälschungssicheres und ein eindeutig zurückverfolgbares Bauteil herzustellen. Des weiteren ist denkbar, dass der Balg über den Transponder mit der Umgebung kommunizieren kann. Hierbei ist denkbar, dass der so ausgerüstete Balg analog einem "Schlüssel-Schloss-Prinzip" nur dann die Benutzung einer Maschine / eines Fahrzeugs zulässt, wenn sie/ es mittels des Transponders als "richtig" erkannt wurde. Der Transponder könnte idealer Weise in Form einer Folie vorliegen. Hierdurch wird der Transponder durch die Druckausgleichselemente insbesondere vor Kompressionen geschützt.

Das Druckausgleichselement könnte einen Sensor zur Erfassung des Beladungszustandes bzw. der Kontamination des Druckausgleichselements aufweisen. Der Sensor kann eindringendes Wasser, den Beladungszustand des Filters oder andere Kontaminationen detektierten. Bekannt sind bei sensorischen Dichtelementen beispielsweise die Verwendung von Lichtleitersensoren oder kapazitiven Sensoren die die Änderung der Dieelektrizität im Vliesstoff erfassen können.

Das Druckausgleichselement könnte durch eine Kappe abgedeckt werden, um eine grobe Verschmutzung vom Eintritt fernzuhalten. Die Kappe könnte direkt an das Druckausgleichselement angespritzt sein. Die Kappe könnte derart ausgebildet sein, dass sie den äußeren Rand des Anbindungselements überdeckt und sich ein in Richtung des Grundkörpers gerichteter Ringspalt ausbildet.

Der Vliesstoff ist als Nassvlies, Meltblown-Vlies, Trockenvlies, Spinnvlies oder als Kombination der genannten Typen ausgestaltet.

Der Vliesstoff könnte eine Dicke d aufweisen, die größer oder gleich der fünfachen Dicke der dünnsten verwendeten Faser im Vliesstoff ist. Durch diese konkrete Ausgestaltung kann die Filterwirkung des Vliesstoff überraschend gesteigert werden.

Vor diesem Hintergrund ist denkbar, den Vliesstoff hydrophob auszugestalten. Hierdurch wird verhindert, dass Wasser in flüssiger Form in das Innere des Balgs eindringt. Die hydrophobe Ausrüstung könnte durch hydrophobe Fasern, hydrophobe Partikel, hydrophobe, physikalisch haftende Schichten oder hydrophobe Substanzen erfolgen, die chemisch mit der Oberfläche verbunden sind.

Der Vliesstoff könnte des Weiteren hochtemperaturbeständig ausgestaltet sein. Vor diesem Hintergrund könnte der Vliessiofif Graphitfasern und anorganische Fasern aus Glas, sowie hochtemperatur-beständigen Polymeren wie Kevlar, PTFE oder PEEK aufweisen. Aus herkömmlichen Bälgen sind Polyester, Polyamide oder Polypropylen bekannt.

Schließlich könnte der Vliesstoff mit einem Medium getränkt werden, welches die Filterwirkung des Druckausgleichselements verbessert.

Des weiteren könnte der Vliesstoff zumindest auf einer Seite mit einem Klebstoff beschichtet oder ausgerüstet sein. Dadurch lässt sich eine vereinfachte, verrutschsichere Montage des Vliesstoffes am Balg oder an der Stange erzielen.

Es gibt nun verschiedene Möglichkeiten, die Lehre der vorliegenden Erfindung auf vorteilhafte Weise auszugestalten und weiterzubilden. Dazu ist einerseits auf die nachgeordneten Ansprüche, andererseits auf die nachfolgende Erläuterung bevorzugter Ausführungsbeispiele der Erfindung anhand der Zeichnung zu verweisen.

In Verbindung mit der Erläuterung der bevorzugten Ausführungsbeispiele anhand der Zeichnung werden auch im Allgemeinen bevorzugte Ausgestaltungen und Weiterbildungen der Lehre erläutert.

### Kurzbeschreibung der Zeichnung

In der Zeichnung zeigen
- Fig. 1: einen Balg mit einem sich axial erstreckenden Druckausgleichselement,
- Fig. 2: einen Balg, bei welchem zwei Druckausgleichselemente axial benachbart angeordnet sind,
- Fig. 3: einen Balg, bei welchem zwei Druckausgleichselemente radial benachbart angeordnet sind,
- Fig. 4: einen Balg, bei welchem das Anbindungselement nicht integral mit dem Grundkörper, sondern als separates Bauteil ausgebildet ist,
- Fig. 5: ein Anbindungselement mit Stegen, weiche ein Druckausgleichselement partiell komprimieren, fixieren und eine Filterwirkung ermöglich,
- Fig. 6: eine Hülse mit Ausnehmungen zur Aufnahme von Druckausgleichselementen, welche im Anbindungselement positioniert ist,
- Fig. 7: eine Querschnittsfläche einer Hülse gemäß Fig. 6, wobei die Druckausgleichselemente umfänglich angeordnet sind,
- Fig. 8: eine Querschnittsfläche einer Hülse gemäß Fig. 6, wobei die Druckausgleichselemente kreissegmentartig angeordnet sind,
- Fig. 9: eine Querschnittsfläche einer Hülse gemäß Fig. 6, wobei lediglich eine Hälfte der Querschnittsfläche mit einem Druclcausgleichselement versehen ist, und
- Fig. 10: eine perspektivische Ansicht eines Druckausgleichselements, weiches als flächige Lage ausgestaltet ist.

### Ausführung der Erfindung

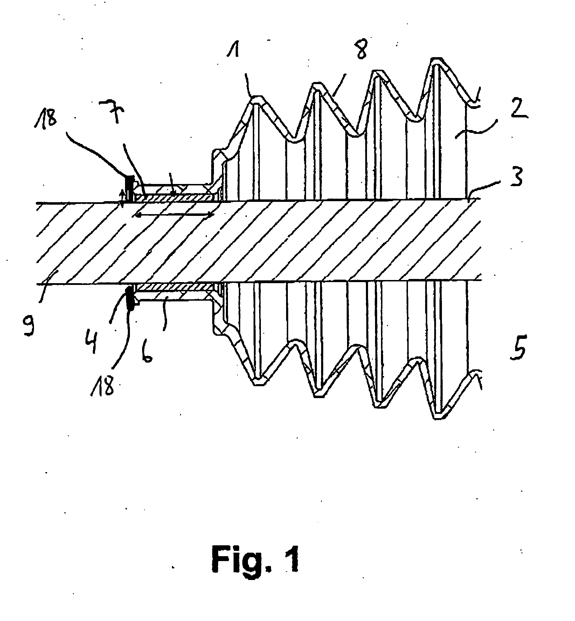

Fig. 1 zeigt einen Balg mit einem reversibel deformierbaren Grundkörper 1, welcher ein Volumen 2 einschließt und einen Durchgang 3 mit einem ersten Ende 4 und einem zweiten Ende 5, wobei dem Grundkörper 1 zumindest am ersten Ende 4 ein sich axial erstreckendes Anbindungselement 6 zugeordnet ist. Das erste Ende 4 weist einen kleineren Durchmesser auf als das zweite Ende 5. Dem Anbindungselement 6 ist zumindest ein Druckausgleichselement 7 zugeordnet, welches ein in das Volumen 2 eintretendes Fluid filtert und sich in axialer Richtung erstreckt. Das Druckausgleichselement 7 ist aus einem Vliesstoff gefertigt, der sich in axialer Richtung erstreckt und lagenförmig ausgebildet ist.

Das Druckausgleichselement 7 zeigt in axialer Richtung eine größere Ausdehnung als in radialer Richtung. Das Anbindungselement 6 umgibt das Druckausgleichselement 7 vollständig. Das Druckausgleichselement 7 ist kann austauschbar ausgestaltet sein und vom Grundkörper 1 zerstörungsfrei abtrennbar sein. Der Grundkörper 1 weist Falten 8 auf und ist aus Elastomer oder thermoplastischem Elastomer gefertigt. Der Balg ist daher als Faltenbalg ausgestaltet. Das Anbindungselement 6 ist integral mit dem Grundkörper 1 ausgestaltet und ebenfalls aus Elastomer oder thermoplastischem Elastomer gefertigt.

Das Anbindungselement 6 und das Druckausgleichselement 7 sind konzentrisch zueinander angeordnet und umgeben beide eine Stange 9. Das Druckausgleichselement 7 ist dabei ringförmig und als flächige Lage ausgebildet. Dem Druckausgleichselement 7 ist eine Kappe 18 zugeordnet.

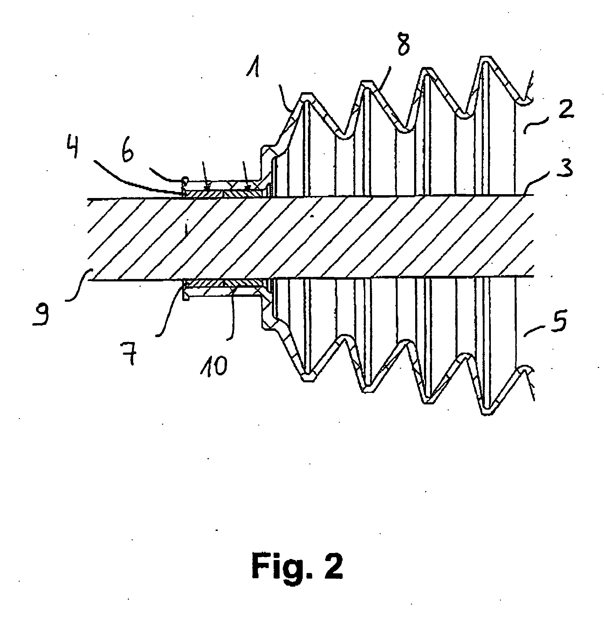

Fig. 2 zeigt einen Balg gemäß Fig, 1 allerdings ohne Kappe 18, bei welchem zwei Druckausgleichselemente 7 und 10 in axialer Richtung benachbart angeordnet sind.

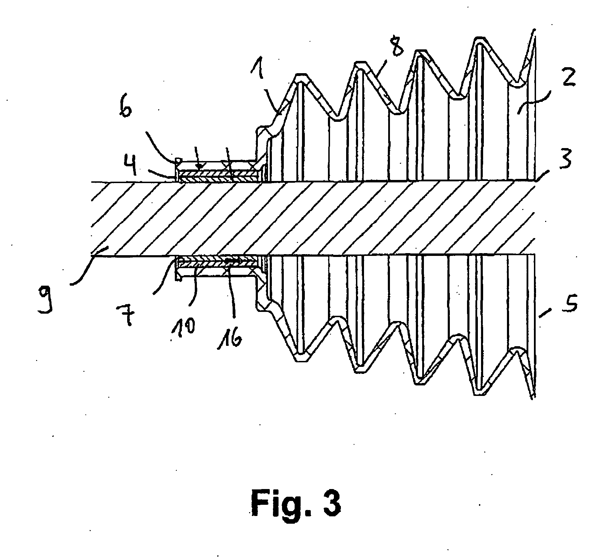

Fig. 3 zeigt einen Balg gemäß Fig. 1 ohne Kappe 18, bei welchem zwei Druckausgleicfiselemente 7 und 10 in radialer Richtung benachbart angeordnet sind. Zwischen den Druckausgleichselementen 7, 10 ist ein Transponder 16 angeordnet.

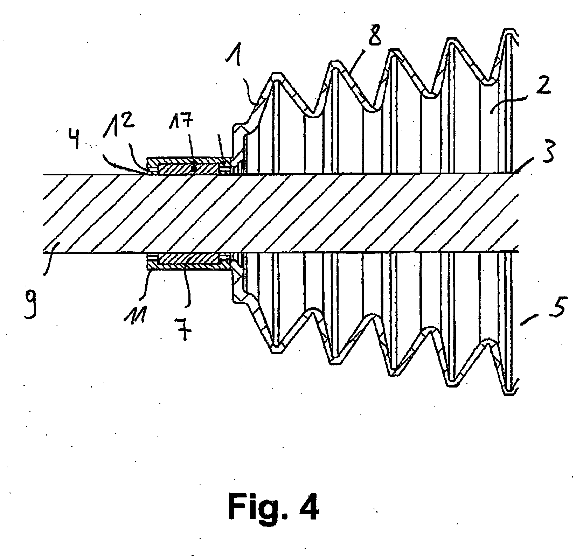

Fig. 4 zeigt einen Balg mit einem Anbindungselement 11, welches aus einem anderen Material gefertigt ist als der Grundkörper 1. Das Anbindungselement 11 kann zusammen mit dem Druckausgleichselement 7 auf die Stange 9 aufgeschoben werden und dichtend am Grundkörper 1 anliegen. Im Anbindungselement 11 sind Durchgänge 12 ausgebildet, welche einen Ffuiddurchtritt erlauben. Das Anbindungselement 11 ist als ein zum Grundkörper 1 separates Bauteil ausgebildet. Das Druckausgleichselement 7 weist einen Sensor 17 zur Erfassung des Beladungszustandes bzw. der Kontamination auf.

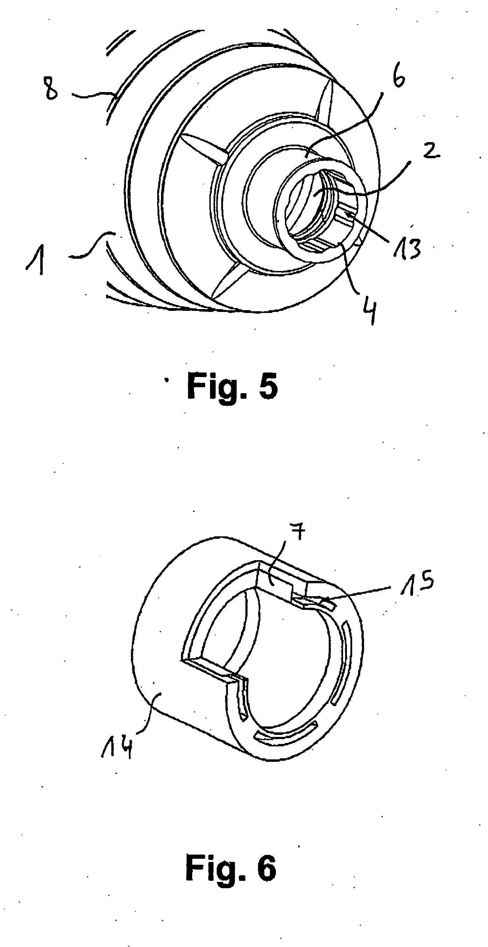

Fig. 5 zeigt ein Anbindungselement 6, welches Stege 13 aufweist, die ein nicht gezeigtes Druckausgieichseiement 7,10 partiell komprimieren können. Um das Anbindungselement 6 kann eine Feder- oder Schlauchklemme gelegt werden, welche das Anbindungselement 6 in radialer Richtung zusammendrückt und dadurch ein nicht gezeigtes, eingelegtes Druckausgleichselement 7, 10 durch die Stege 13 partiell gegen eine nicht gezeigte Stange drückt und dadurch komprimiert.

Fig. 6 zeigt eine Hülse 14, welche Ausnehmungen 15 aufweist, in die wahlweise Druckausgleichselemente 7, 10 eingelegt werden können. Des Weiteren zeigt die Hülse 14 ein ringförmiges Druckausgleichselement 7, welches in axialer Richtung durchströmt werden kann.

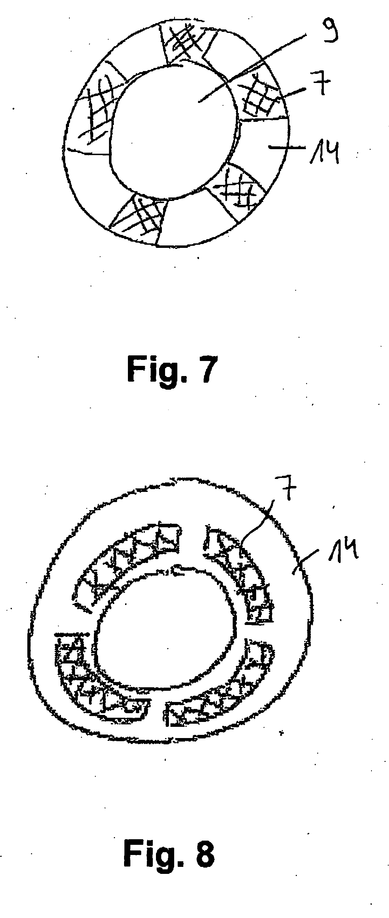

Fig. 7 zeigt in einem Querschnitt mehrere Druckausgleichselemente 7, die in eine Hülse 14 eingebettet sind. Im Querschnitt umgeben die Druckausgleichselemente 7 eine Stange 9 umfänglich und bilden Kanäle für einen Fluiddurchtritt.

Fig. 8 zeigt eine Hülse 14, bei welcher die Druckausgleichselemente derart angeordnet sind, dass sie im Querschnitt Kreissegmente definieren.

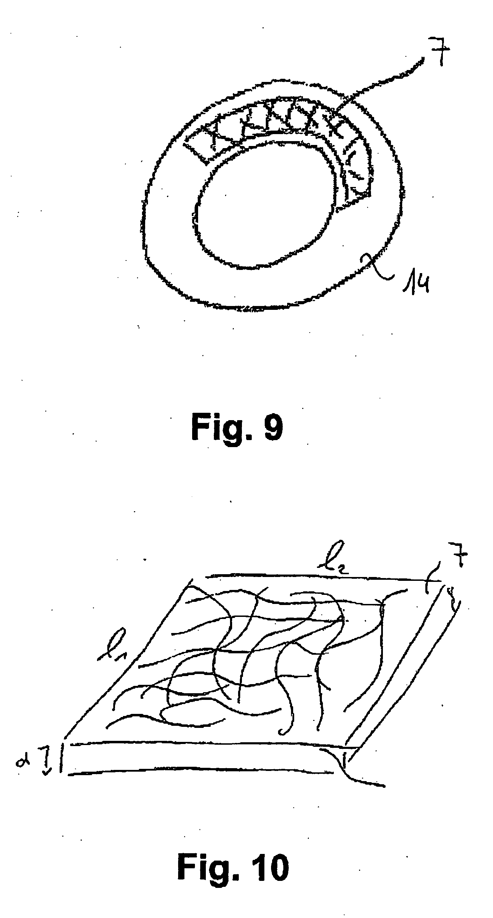

Fig. 9 zeigt eine Hülse 14, bei der ein Druckausgleichselement als ein einziges Kreissegment ausgestaltet ist. Das Kreissegment erstreckt sich über ein spezielles Bogenmaß, hier über etwa 180°.

Fig. 10 zeigt ein Druckausgleichselement 7, welches aus Vliesstoff gefertigt ist. Das Druckausgleichselement 7 ist als flächige Lage ausgestaltet, die eine Dicke d und Kantenlängen 11 und 12 aufweist. Dabei sind die Kantenlängen 11 und 12 um ein Vielfaches größer als die Dicke d. Vorzugsweise ist zumindest eine Kantelänge I1 fünfmal größer als die Dicke d.

Die Tabelle zeigt Vliesstoffe der Freudenberg Vliesstoffe KG, Weinheim, die als Druckausgleichselemente 7, 10 verwendet werden können. Die Flächengewichtsmessungen erfolgten nach EN 29073-1 die Dickenmessung nach EN 20534.

Als Wasser blockierender Vliesstoff kann der Typ K 3416 T der Fa. Freudenberg Vliesstoffe KG, Weinheim verwendet werden. Als Vliesstoff, der Phase-Change-Materials enthält, kann das Material CTV 140/41 N der Fa. Freudenberg Vliesstoffe KG, Weinheim verwendet werden.

Hinsichtlich weiterer vorteilhafter Ausgestaltungen und Weiterbildungen der erfindungsgemäßen Lehre wird einerseits auf den allgemeinen Teil der Beschreibung und andererseits auf die Patentansprüche verwiesen.

Abschließend sei ganz besonders hervorgehoben, dass die zuvor rein willkürlich ausgewählten Ausführungsbeispiele lediglich zur Erörterung der erfindungsgemäßen Lehre dienen, diese jedoch nicht auf diese Ausführungsbeispiele einschränken.

**Tabelle**

| Material | Herstellung | Polymer | Flächengewicht | Dicke | Faserdurchmesser |
|---|---|---|---|---|---|
| | | | [g/m²] | [µm) | [µm] |
| FS 2190 | Meltblown | PP | 43 | 230 | 3 |
| FS 2206-14 | Nassvlies | PP/PE | 60 | 140 | 11 |
| FS 2207 | Nassvlies | PP/PE | 67 | 210 | 11 |
| FS 22345 | Nassvlies | PES | 45 | 400 | 14 |
| FS 22167-18 | Nassvlies | PA6 / PA66 | 67 | 180 | 11 |
| FFA 2037 | Nassvlies | PES | 155 | 950 | 3-12 |
| H 1009 | Trockenvlies | PES | 100 | 190 | 14 |
| FS 2647-20 | Trockenvlies | PA6 / PA66 | 67 | 180 | 11 |
| EVOLON | Microfaser-Spinnvlies | PA / PET | 120 | 250 | 5 |
| 9V A403 | Spinnvlies-Meltblown-Compound | PP | 60 | 400 | 20/5 |
| X0071 | Trockenvlies | Kohlefaser | 68 | 840 | 15 |
| FO 2440 | Trockenvlies | PPS | 90 | 130 | 15 |

## Patentansprüche

1. Balg mit einem reversibel deformierbaren Grundkörper (1), welcher ein Volumen (2) einschließt und einen Durchgang (3) mit einem ersten Ende (4) und einem zweiten Ende (5) aufweist, wobei dem Grundkörper (1) zumindest am ersten Ende (4) ein sich axial erstreckendes ringförmiges Anbindungselement (6, 11) zugeordnet ist, wobei, dem Anbindungselement (6, 11) zumindest ein sich in axialer Richtung erstreckendes Druckausgleichselement (7, 10) zugeordnet ist, **dadurch gekennzeichnet, dass** das Drackausgleichs element (7, 10) zumindest einen sich in axialer Richtung erstreckenden Vliesstoff aufweist, wobei das Druckausgleichselement (7, 10) in axialer Richtung eine größere Ausdehnung aufweist als in radialer Richtung, wobei der Fluid austausch in der Sich in Längsrichtang erstrecken den Ebene des Vliesstoffs erfolgt und wobei der Vliesstoff als Nassvlies, Meltblown - Vlies, Trockenvlies, Spinnvlies oder als Kombination der genannten Typen ausgestaltet ist.

2. Balg nach Anspruch 1, **dadurch gekennzeichnet, dass** das Anbindungselement (6, 11) das Druckausgleichselement (7) zumindest teilweise umgibt.

3. Balg nach **Anspruch 1 oder 2**, **dadurch gekennzeichnet, dass** das Druckausgleichselement (7, 10) austauschbar ausgestaltet ist und vom Grundkörper (1) zerstörungsfrei abtrennbar ist.

4. Balg nach einem der Ansprüche 1 bis 3, **dadurch gekennzeichnet, dass** das Anbindungselement (6, 11) und das Druckausgleichselement (7, 10) konzentrisch angeordnet sind.

5. Balg nach einem der Ansprüche 1 bis **4**, **dadurch gekennzeichnet, dass** das Druckausgleichselement (7, 10) ringförmig ausgebildet ist.

6. Balg nach einem der Ansprüche 1 bis **4**, **dadurch gekennzeichnet, dass** sich das Druckausgleichselement (7,10) spiralförmig im Anbindungselement (6,11) erstreckt.

7. Balg nach einem der Ansprüche 1 bis **6**, **dadurch gekennzeichnet, dass** zwei Druckausgleichselemente (7, 10) in axialer Richtung benachbart angeordnet sind.

8. Balg nach einem der Ansprüche 1 bis **7**, **dadurch gekennzeichnet, dass** zwei Druckausgleichselemente (7, 10) in radialer Richtung benachbart angeordnet sind.

9. Balg nach einem der Ansprüche 1 bis **8**, **dadurch gekennzeichnet, dass** mehrere Druckausgleichselemente (7, 10) in eine Hülse (14) eingebettet sind.

10. Balg nach einem der Ansprüche 1 bis **9**, **dadurch gekennzeichnet, dass** zwischen dem Anbindungselement (6, 11) und dem Druckausgleichselement (7,10) oder zwischen zwei Druckausgleichselementen (7, 10) ein Transponder (16) angeordnet ist.

11. Balg nach einem der Ansprüche 1 bis **10**, **dadurch gekennzeichnet, dass** das Druckausgleichselement (7, 10) einen Sensor (17) zur Erfassung des Beladungszustandes bzw. der Kontamination aufweist.

12. Balg nach einem der Ansprüche 1 bis **11**, **dadurch gekennzeichnet, dass** dem Druckausgleichselement (7, 10) eine Kappe (18) zugeordnet ist.

## Claims

1. Bellows with a reversibly deformable basic body (1) which encloses a volume (2) and has a passage (3) with a first end (4) and with a second end (5), the basic body (1) being assigned, at least at the first end (4), an axially extending annular tie-up element (6, 11), the tie-up element (6, 11) being assigned to at least one pressure equalization element (7, 10) extending in the axial direction, **characterized in that** the pressure equalization element (7, 10) has at least one nonwoven extending in the axial direction, the pressure equalization element (7, 10) having a greater extent in the axial direction than in the radial direction, fluid exchange taking place in the longitudinally extending plane of the nonwoven, and the nonwoven being configured as a wet-laid bonded web, melt-blown bonded web, dry-laid bonded web, spun-bonded web or as a combination of the said types.

2. Bellows according to Claim 1, **characterized in that** the tie-up element (6, 11) at least partially surrounds the pressure equalization element (7).

3. Bellows according to Claim 1 or 2, **characterized in that** the pressure equalization element (7, 10) is configured to be exchangeable and can be separated non-destructively from the basic body (1).

4. Bellows according to one of Claims 1 to 3, **characterized in that** the tie-up element (6, 11) and the pressure equalization element (7, 10) are arranged concentrically.

5. Bellows according to one of Claims 1 to 4, **characterized in that** the pressure equalization element (7, 10) is of annular design.

6. Bellows according to one of Claims 1 to 4, **characterized in that** the pressure equalization element (7, 10) extends spirally in the tie-up element (6, 11).

7. Bellows according to one of Claims 1 to 6, **characterized in that** two pressure equalization elements (7, 10) are arranged adjacently in the axial direction.

8. Bellows according to one of Claims 1 to 7, **characterized in that** two pressure equalization elements (7, 10) are arranged adjacently in the radial direction.

9. Bellows according to one of Claims 1 to 8, **characterized in that** a plurality of pressure equalization elements (7, 10) are embedded into a sleeve (14).

10. Bellows according to one of Claims 1 to 9, **characterized in that** a transponder (16) is arranged between the tie-up element (6, 11) and the pressure equalization element (7, 10) or between two pressure equalization elements (7, 10).

11. Bellows according to one of Claims 1 to 10, **characterized in that** the pressure equalization element (7, 10) has a sensor (17) for detecting the load state or the contamination.

12. Bellows according to one of Claims 1 to 11, **characterized in that** the pressure equalization element (7, 10) is assigned a cap (18).

## Revendications

1. Soufflet comprenant un corps de base (1) déformable de manière réversible, qui renferme un volume (2) et présente un passage (3) avec une première extrémité (4) et une deuxième extrémité (5), un élément de liaison (6, 11) de forme annulaire, s'étendant axialement, étant associé au corps de base (1) au moins au niveau de la première extrémité (4), au moins un élément de compensation de la pression (7, 10) s'étendant dans la direction axiale étant associé à l'élément de liaison (6, 11), **caractérisé en ce que** l'élément de compensation de la pression (7, 10) présente au moins un non-tissé s'étendant dans la direction axiale, l'élément de compensation de la pression (7, 10) présentant dans la direction axiale une plus grande étendue que dans la direction radiale, l'échange de fluide ayant lieu dans le plan du non-tissé s'étendant dans la direction longitudinale et le non-tissé étant configuré sous forme de non-tissé humide, de non-tissé soufflé en fusion, de non-tissé sec, de non-tissé filé ou d'une combinaison des types mentionnés.

2. Soufflet selon la revendication 1, **caractérisé en ce que** l'élément de liaison (6, 11) entoure l'élément de compensation de la pression (7) au moins en partie.

3. Soufflet selon la revendication 1 ou 2, **caractérisé en ce que** l'élément de compensation de la pression (7, 10) est configuré sous forme interchangeable et peut être séparé sans destruction du corps de base (1).

4. Soufflet selon l'une quelconque des revendications 1 à 3, **caractérisé en ce que** l'élément de liaison (6, 11) et l'élément de compensation de la pression (7, 10) sont disposés concentriquement.

5. Soufflet selon l'une quelconque des revendications 1 à 4, **caractérisé en ce que** l'élément de compensation de la pression (7, 10) est réalisé sous forme annulaire.

6. Soufflet selon l'une quelconque des revendications 1 à 4, **caractérisé en ce que** l'élément de compensation de la pression (7, 10) s'étend en spirale dans l'élément de liaison (6, 11).

7. Soufflet selon l'une quelconque des revendications 1 à 6, **caractérisé en ce que** deux éléments de compensation de la pression (7, 10) sont disposés l'un à côté de l'autre dans la direction axiale.

8. Soufflet selon l'une quelconque des revendications 1 à 7, **caractérisé en ce que** deux éléments de compensation de la pression (7, 10) sont disposés l'un à côté de l'autre dans la direction radiale.

9. Soufflet selon l'une quelconque des revendications 1 à 8, **caractérisé en ce que** plusieurs éléments de compensation de la pression (7, 10) sont incorporés dans une douille (14).

10. Soufflet selon l'une quelconque des revendications 1 à 9, **caractérisé en ce qu'**entre l'élément de liaison (6, 11) et l'élément de compensation de la pression (7, 10) ou entre deux éléments de compensation de la pression (7, 10) est disposé un transpondeur (16).

11. Soufflet selon l'une quelconque des revendications 1 à 10, **caractérisé en ce que** l'élément de compensation de la pression (7, 10) présente un capteur (17) pour détecter l'état de charge ou de contamination.

12. Soufflet selon l'une quelconque des revendications 1 à 11, **caractérisé en ce qu'**un capuchon (18) est associé à l'élément de compensation de la pression (7, 10).
